Europäisches Patentamt

(19) European Patent Office

Office européen des brevets

(11) Veröffentlichungsnummer: **0 029 999**

**A1**

(12) EUROPÄISCHE PATENTANMELDUNG

(21) Anmeldenummer: 80107351.1

(22) Anmeldetag: 25.11.80

(51) Int. Cl.³: **B 06 B 1/18**
   **B 01 L 9/02**

(30) Priorität: 01.12.79 DE 2948410

(43) Veröffentlichungstag der Anmeldung:
   10.06.81 Patentblatt 81/23

(84) Benannte Vertragsstaaten:
   AT BE CH DE FR GB IT LI LU NL SE

(71) Anmelder: Becker Dental-Labor GmbH.
   Rotter Bruch 24
   D-5100 Aachen(DE)

(72) Erfinder: Becker, Günter
   Rotter Bruch 24
   D-5100 Aachen(DE)

(72) Erfinder: Weiden, Horst
   Buttergasse 14
   D-5190 Stolberg(DE)

(74) Vertreter: Selting, Günther, Dipl.-Ing. et al,
   Deichmannhaus
   D-5000 Köln 1(DE)

(54) Rüttler.

(57) Ein Rüttler, mit dem körniges der pulverförmiges Gut gerüttelt wird, ist an seiner Unterseite mit einem durch eine umlaufende Fußleiste (29) abgeschlossenen Hohlraum (27) versehen, an den eine Saugvorrichtung (25) angeschlossen ist. Die Saugvorrichtung (25) wird durch den Antrieb der Vibrationsvorrichtung (21) betrieben. Der Rüttler saugt sich daher an der ihn tragenden Unterlage (28) fest, sobald die Vibrationsvorrichtung (21) in Betrieb gesetzt wird. Auf diese Weise wird verhindert, daß der Rüttler sich auf der Unterlage (28) verschiebt oder wandert.

./...

EP 0 029 999 A1

**0029999**

VON KREISLER SCHÖNWALD EISHOLD FUES
VON KREISLER KELLER SELTING WERNER

Becker Dental-Labor GmbH

Rotter Bruch 24

D-5100 Aachen

PATENTANWALTE

Dr.-Ing. von Kreisler † 1973
Dr.-Ing. K. Schönwald, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln
Dr. H.-K. Werner, Köln

DEICHMANNHAUS AM HAUPTBAHNHOF
D-5000 KÖLN 1

25. November 1980
Sg/in

Rüttler.
_____

Die Erfindung betrifft einen Rüttler mit einer Vibrationsvorrichtung, einem von der Vibrationsvorrichtung angetriebenen Rütteltisch und einem die Vibrationsvorrichtung und den Rütteltisch tragenden Unterteil.

In der Dentaltechnik werden Rüttler eingesetzt, um eine Gipsmasse blasen- und lunkerfrei in Formen einführen zu können, die für die Herstellung von Gipsmodellen verwendet werden. Die Form wird auf den Rütteltisch gelegt und durch diesen in Vibration versetzt. Das Gips wird mit Wasser vermischt, in fließfähigem Zustand in die Form eingegeben und verläuft in dieser. Die Vibrationsvorrichtungen der bekannten Rüttler sind entweder mit Schwingmagneten oder mit Exzenterantrieben ausgestattet.

Bei den bekannten Rüttlern besteht eine Schwierigkeit darin, zu verhindern, daß die Geräte während des Betriebes auf dem Arbeitstisch, auf den sie gestellt werden, wandern. Um eine ausreichende Standsicherheit zu erzeugen, werden die Rüttler mit schweren Platten im Unterteil versehen, so daß sie ein großes Gewicht erhalten und das Unterteil durch die Vibration nicht wesentlich beeinflußt wird. Das große Gewicht hat aber Nachteile nicht nur bei der Fertigung der Geräte, sondern auch bei ihrer Benutzung, da das Umsetzen eines Gerätes einen erheblichen Kraftaufwand erfordert. Außerdem wird durch die zusäztlichen Gewichte die Herstellung verteuert.

Aufgabe der Erfindung ist es, einen Rüttler der eingangs genannten Art so auszubilden, daß er trotz eines relativ geringen Gewichtes eine hohe Standsicherheit auf einer Unterlage hat.

Zur Lösung dieser Aufgabe ist erfindungsgemäß vorgesehen, daß das Unterteil eine an seiner Unterseite geschlossen umlaufende Fußleiste aufweist, die bei Auflegen auf eine ebene Fläche einen Hohlraum abdichtend abschließt, und daß der Hohlraum an eine Saugvorrichtung angeschlossen ist, die in ihm einen Unterdruck erzeugt.

Der erfindungsgemäße Rüttler saugt sich infolge des Unterdrucks an einer Unterlage, z.B. der Fläche eines Arbeitstisches, fest, so daß er einen festen Stand erhält und nicht wandert. Der Rüttler kann daher relativ leichtgewichtig ausgeführt werden, weil seine Standsicherheit nicht durch Gewichte hervorgerufen wird, sondern durch Saugwirkung, die nur im eingeschalteten Zustand hervorgerufen wird.

Bei Verwendung eines Motorantriebs für die Vibrationsvorrichtung kann die Saugvorrichtung aus einem Gebläse bestehen, das mit der Motorwelle des Antriebs gekoppelt ist und aus dem Hohlraum unterhalb des Unterteiles die Luft absaugt und in die umgebende Atmosphäre leitet. Auch bei Verwendung anderer Antriebsvorrichtungen ist eine entsprechende Kopplung mit der Saugvorrichtung möglich, so daß die Saugvorrichtung keinen separaten Antrieb benötigt. Andererseits kann es bei einem Rüttler mit Schwingmagneten auch zweckmäßig sein, eine Saugvorrichtung mit separatem Antrieb vorzusehen.

Schwingmagneten und Exzenterantriebe haben den Nachteil einer schlechten Regelbarkeit von Schwingfrequenz und Schwingungsamplitude. Es sind pneumatisch angetriebene Rüttler bekannt (US-PS 3 365 964), bei denen die Vibration durch eine Kugel verursacht wird, die durch einen Luftstrom in einem Gehäuse bewegt wird. Bei einem Rüttler mit pneumatisch angetriebener Vibrationsvorrichtung kann gemäß einer besonders vorteilhaften Weiterbildung der Erfindung der Abluftkanal eine Venturidüse enthalten, deren Sauganschluß mit dem Hohlraum verbunden ist. In diesem Fall wird der Abluftstrom durch eine Strahlpumpe geleitet und zum Absaugen der Luft aus dem Hohlraum benutzt. Der hierzu erforderliche technische Aufwand ist sehr gering, weil außer der Venturidüse und den entsprechenden Luftleitungen sowie der Randabdichtung des Unterteiles keine zusätzlichen Bauteile benötigt werden, und insbesondere keine Bauteile von aufwendiger Konstruktion oder komplizierter Gestalt.

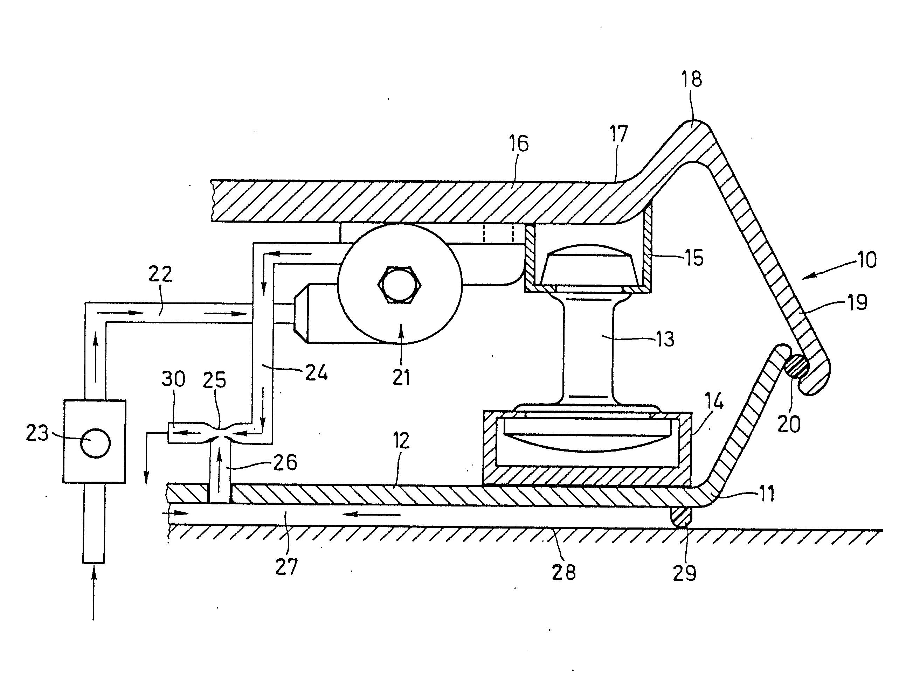

Im folgenden wird unter Bezugnahme auf die einzige Figur der Zeichnung ein bevorzugtes Ausführungsbeispiel der Erfindung näher erläutert.

In der Zeichnung ist schematisch ein Längsschnitt durch einen Rüttler mit pneumatischem Antrieb dargestellt.

Der abgebildete Rüttler 10 weist ein wannenförmiges Unterteil 11 mit ebener Unterseite 12 auf. Auf dem wannenförmigen Unterteil 11 ruhen mehrere elastische Stützen 13, von denen in der Zeichnung nur eine dargestellt ist. Die elastischen Stützen 13, die aus Gummi o.dgl. bestehen, sind an ihren unteren Enden an einem unteren Halter 14 und mit ihren oberen Enden an einem oberen Halter 15 befestigt. Der zylindrische Mittelteil dient jeweils als Federelement für die elastische Lagerung des Rütteltisches 16, an dessen Unterseite die obere Halterung 15 befestigt ist.

Der Rütteltisch 16 weist eine Mulde 17 auf, auf die zu rüttelnden Gegenstände gelegt werden. Die Mulde 17 ist von einem umlaufenden Wulst 18 umgeben, der in eine Seitenwand 19 übergeht, welche schräg nach außen geneigt ist und den Rand des schalenförmigen Unterteiles 11 übergreift. Zwischen dem Rand des Unterteiles 11 und dem übergreifenden Rand des Rütteltisches 16 befindet sich eine umlaufende Dichtleiste 20 aus elastischem Material. Auf diese Weise bilden der Rütteltisch 16 und das Unterteil 11 ein geschlossenes Rüttlergehäuse, das schallgedämpft und gegen Eindringen von Schmutz abgedichtet ist.

An der Unterseite des Rütteltisches 16 ist die Vibrationsvorrichtung 21 in Form eines bekannten pneumatisch angetriebenen Kugelvibrators befestigt. Die Druckluftversorgungsleitung 22 für die Vibrationsvorrichtung 21 enthält ein Schalt- und Regulierventil 23, das an eine (nicht dargestellte) Druckluftquelle angeschlossen wird. Der Abluftkanal 24 der Vibrationsvorrichtung 21 führt in die Nähe der Bodenplatte 12 des Unterteiles 11. Dort ist in den Abluftkanal eine Venturidüse 25 eingesetzt, deren Sauganschluß 26 in einen unter der Bodenplatte 12 gebildeten Hohlraum 27 hineinführt. Der Hohlraum 27 wird über einer Tischfläche 28 o.dgl. dadurch gebildet,daß das Unterteil 11 an seiner Unterseite eine umlaufende Fußleiste 29 aufweist, die nach unten vorsteht, so daß die Bodenplatte 12 sich im Abstand über der Tischfläche 28 befindet. Die Fußleiste 29 besteht aus einem elastischen Werkstoff, z.B. Gummi, der einen dichten Abschluß des Hohlraumes 27 gegenüber der Tischfläche 28 bewirkt. Der Hohlraum 27 wird also von der Bodenplatte 12 des Unterteiles 11, der Tischplatte 28 und der Fußleiste 29 begrenzt. Die in ihm enthaltene Luft wird durch die Venturidüse 25 hindurch abgesaugt und über eine Auslaßleitung 30 zusammen mit der Abluft der Vibrationsvorrichtung 21 in die Atmosphäre abgeleitet.

Wenn der Rüttler in  Betrieb ist, strömt Druckluft durch die Versorgungsleitung 22 zur Vibrationsvorrichtung 21. Die Abluft der Vibrationsvorrichtung 21 wird über den Abluftkanal 24 und die Venturidüse 26 ins Freie geleitet. Dabei wird gleichzeitig Luft aus dem Hohlraum 27 angesaugt und mit abgeführt. In dem Hohlraum 27 entsteht also ein Unterdruck, wodurch sich das Unterteil 11 an der Tischplatte 28 festsaugt. Dadurch wird verhindert, daß der Rüttler 10 infolge der Vibrationsbewegung auf der Tischfläche wandert.

- 6 -

Ansprüche

1. Rüttler mit einer Vibrationsvorrichtung, einem von der Vibrationsvorrichtung angetriebenen Rütteltisch und einem die Vibrationsvorrichtung und den Rütteltisch tragenden Unterteil, d a d u r c h   g e k e n n z e i c h n e t, daß das Unterteil (11) eine an seiner Unterseite geschlossen umlaufende Fußleiste (29) aufweist, die bei Auflage auf eine ebene Fläche (28) einen Hohlraum (27) abdichtend abschließt, und daß der Hohlraum (27) an eine Saugvorrichtung (25) angeschlossen ist, die in ihm einen Unterdruck erzeugt.

2. Rüttler nach Anspruch 1, d a d u r c h   g e k e n nz e i c h n e t, daß die Vibrationsvorrichtung (21) einen pneumatischen Antrieb aufweist und ihr Abluftkanal (24) eine Venturidüse (25) enthält, deren Sauganschluß (26) mit dem Hohlraum (27) verbunden ist.

**Europäisches Patentamt**

## EUROPÄISCHER RECHERCHENBERICHT

Nummer der Anmeldung

EP 80 10 7351

| | EINSCHLÄGIGE DOKUMENTE | | KLASSIFIKATION DER ANMELDUNG (Int. Cl.¹) |
|---|---|---|---|
| Kategorie | Kennzeichnung des Dokuments mit Angabe, soweit erforderlich, der maßgeblichen Teile | betrifft Anspruch | |
| X | US - A - 2 749 097 (BILLNER)<br><br> * Spalte 1, Zeilen 25-29, 46-61; Spalte 2, Zeilen 29-32; Figuren * <br><br>-- | 1,2 | B 06 B 1/18<br>B 01 L 9/02 |
| | BE - A - 400 752 (PINES)<br><br>-- | 1 | |
| | H. FRANKE: "Lexikon der Physik", 3. Auflage 1969, Franckh'sche Verlagshandlung, Seite 1774 Stuttgart, DE<br><br>----- | 2 | **RECHERCHIERTE SACHGEBIETE (Int. Cl.³)**<br><br>B 06 B |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-03-1981 | SEMBRITZKI |

EPA form 1503.1 06.78